# EUROPEAN PATENT APPLICATION

(11) **EP 4 787 871 A1**
(43) Date of publication of application: **05.08.2026**
(21) Application number: 24873148.1
(22) Date of filing: 26.09.2024
(51) Int. Cl.: H04N 21/475, G06F 16/735, H04N 21/466, H04N 21/25

(54) **INFORMATION FEEDBACK METHOD, APPARATUS, AND COMPUTER READABLE STORAGE MEDIUM**

(30) Priority: 27.09.2023 CN 202311273303
(71) Applicant: Lemon Inc., Grand Cayman, KY1-1205 (KY)
(72) Inventor: LI, Xiusong, Beijing 100028 (CN); DUAN, Yi, Beijing 100028 (CN); QIU, Hao, Beijing 100028 (CN); YANG, Tengfei, Singapore 018960 (SG); ZHANG, Keyang, Singapore 018960 (SG); YANG, Zhenheng, Beijing 100028 (CN); CHEN, Zhijie, Beijing 100028 (CN); DU, Yuzhang, Beijing 100028 (CN); YANG, Saboya, Beijing 100028 (CN); YE, Weiyi, Beijing 100028 (CN)
(74) Representative: Marks & Clerk LLP
(86) International application number: PCT/SG2024/050626
(87) International publication number: WO 2025/071491

(57) **Abstract**

The present disclosure relates to an information feedback method, an apparatus, and a computer readable storage medium, which relate to the technical field of computers. The method of the present disclosure comprises: displaying first multimedia content; **in** response to a preset trigger condition being met, displaying first candidate feedback information, wherein the first candidate feedback information comprises natural language information associated with one or more pieces of multimedia content already sent to the user, the first candidate feedback information is used for describing a first adjustment strategy for multimedia content sent to the user, and the one or more pieces of multimedia content comprise first multimedia content; receiving a selection operation by the user on the first candidate feedback information; and displaying second multimedia content, wherein the second multimedia content is selected according to a first adjustment strategy.

## Description

### CROSS-REFERENCE TO RELATED APPLICATIONS

The present application is based on and claims priority to CN Application No. 202311273303.6, filed on September 27, 2023, the disclosure of which is incorporated herein by reference in its entirety.

### TECHNICAL FIELD

The present disclosure relates to the field of computer technologies, and in particular, to an information feedback method and apparatus, and a computer-readable storage medium.

### BACKGROUND

The present disclosure relates to the field of computer technologies, and in particular, to an information feedback method and apparatus, and a computer-readable storage medium.

An internet platform generally selects, based on the user's situation such as browsing and viewing, multimedia content from a database and send it to a user side for display.

### SUMMARY

The summary is provided to give a brief overview of concepts, which will be described in detail in the following detailed description of embodiments. The summary is neither intended to identify key or necessary features of the claimed technical solutions nor intended to be used to limit the scope of the claimed technical solutions.

According to some embodiments of the present disclosure, an information feedback method is provided. The method includes: displaying a first multimedia content; displaying first candidate feedback information in response to satisfaction of a preset trigger condition, where the first candidate feedback information includes natural language information associated with one or more multimedia contents already sent to a user, and the first candidate feedback information is configured to describe a first adjustment strategy for multimedia contents sent to the user, and the one or more multimedia contents comprise the first multimedia content; receiving a selection operation of the user for the first candidate feedback information; and displaying a second multimedia content, where the second multimedia content is selected based on the first adjustment strategy.

In some embodiments, the method further includes: receiving an interaction operation of the user for the one or more multimedia contents, where a tendency of the first adjustment strategy is determined based on a type of the interaction operation of the user for the one or more multimedia contents.

In some embodiments, the method further includes: displaying second candidate feedback information, where the second candidate feedback information uses fixed natural language information to describe a second adjustment strategy for multimedia contents sent to the user, and a tendency of the second adjustment strategy is determined based on the type of the interaction operation of the user for the one or more multimedia contents; receiving a selection operation of the user for the second candidate feedback information; and displaying a third multimedia content, where the third multimedia content is selected based on the second adjustment strategy.

In some embodiments, displaying the first candidate feedback information in response to satisfaction of the preset trigger condition includes: receiving a first operation of the user for the first multimedia content; receiving a second operation of the user for the first multimedia content, in a case where the first operation is a preset interaction operation; and determining that the preset trigger condition is satisfied, and displaying the first candidate feedback information, in a case where the second operation is a preset trigger operation

In some embodiments, displaying the first candidate feedback information in response to satisfaction of the preset trigger condition includes: receiving a third operation of the user for the first multimedia content, and displaying a first interaction control; receiving an operation of the user for the first interaction control; and determining that the preset trigger condition is satisfied, and displaying the first candidate feedback information, in response to receiving the operation of the user for the first interaction control.

In some embodiments, the first adjustment strategy includes at least one of: a post-adjustment number of multimedia contents sent to the user, a post-adjustment category of multimedia contents sent to the user, an effective time range for adjustment, an adjustment degree, or a source of adjusted multimedia contents.

In some embodiments, the method further includes: displaying a switching control; receiving an operation of the user for the switching control; displaying post-switching third candidate feedback information, where the third candidate feedback information includes natural language information associated with the one or more multimedia contents already sent to the user, and the third candidate feedback information is configured to describe a third adjustment strategy for multimedia contents sent to the user; receiving a selection operation of the user for the third candidate feedback information; and displaying a fourth multimedia content, where the fourth multimedia content is selected based on the third adjustment strategy.

In some embodiments, the method further includes: displaying first prompt information in response to receiving the selection operation of the user for the first candidate feedback information, where the first prompt information is configured to prompt that the first candidate feedback information has been recorded.

In some embodiments, the method further includes: receiving a cancellation operation of the user for the first candidate feedback information; and displaying second prompt information, where the second prompt information is configured to prompt that a record of the first candidate feedback information has been canceled.

In some embodiments, displaying the second multimedia content includes: receiving an operation of the user for an interface displaying the first candidate feedback information; and displaying the second multimedia content.

In some embodiments, the method further includes: displaying a second interaction control; receiving an operation of the user for the second interaction control; and displaying an interaction area and fourth candidate feedback information, where the fourth candidate feedback information includes the natural language information associated with the one or more multimedia contents already sent to the user, and the fourth candidate feedback information is configured to describe a fourth adjustment strategy for multimedia contents sent to the user.

In some embodiments, the method further includes: receiving a selection operation of the user for the fourth candidate feedback information; and displaying a fifth multimedia content, where the fifth multimedia content is selected based on the fourth adjustment strategy.

In some embodiments, displaying the fifth multimedia content includes: displaying, in response to the selection operation of the user for the fourth candidate feedback information, the fourth candidate feedback information in the interaction area; receiving a confirmation operation of the user for the fourth candidate feedback information; and displaying the fifth multimedia content.

In some embodiments, the method further includes: displaying, in response to the confirmation operation of the user for the fourth candidate feedback information, adjustment information corresponding to the fourth candidate feedback information; and receiving a confirmation operation of the user for the adjustment information, where displaying the fifth multimedia content includes: displaying the fifth multimedia content in response to the confirmation operation of the user for the adjustment information.

In some embodiments, the method further includes: displaying an entry control for historical records; receiving an operation of the user for the entry control for the historical records; and displaying the historical records, where the historical records include the first candidate feedback information.

In some embodiments, the method further includes: receiving a deletion operation of the user for one or more records in the historical records; and displaying the historical records from which the one or more records have been deleted.

In some embodiments, the method further includes: displaying third prompt information, in a case where a number of records in the historical records reaches a preset number, wherein the third prompt information is configured to prompt that the number of records in the historical records reaches the preset number.

In some embodiments, the method further includes: receiving an operation of the user for the third prompt information; displaying the historical records; receiving a deletion operation of the user for one or more records in the historical records; and displaying the historical records from which the one or more records have been deleted.

In some embodiments, the first candidate feedback information is determined based on a category of the first multimedia content.

In some embodiments, the fourth candidate feedback information is determined based on categories of a plurality of multimedia contents already sent to the user within a preset time range.

According to some other embodiments of the present disclosure, an information feedback apparatus is provided. The apparatus includes: a first display module configured to display a first multimedia content; a second display module configured to display first candidate feedback information in response to satisfaction of a preset trigger condition, where the first candidate feedback information includes natural language information associated with one or more multimedia contents already sent to a user, and the first candidate feedback information is configured to describe a first adjustment strategy for multimedia contents sent to the user, and the one or more multimedia contents comprise the first multimedia content; a receiving module configured to receive a selection operation of the user for the first candidate feedback information; and a third display module configured to display a second multimedia content, where the second multimedia content is selected based on the first adjustment strategy.

According to still other embodiments of the present disclosure, an information feedback apparatus is provided. The apparatus includes: a processor; and a memory coupled to the processor, which is configured to store instructions, where the instructions, when executed by the processor, cause the processor to execute the information feedback method according to any one of the embodiments of the present disclosure.

According to yet other embodiments of the present disclosure, a computer-readable storage medium is provided, which has a computer program stored thereon, where the program, when executed by a processor, causes the information feedback method according to any one of the above embodiments to be implemented.

According to still other embodiments of the present disclosure, a computer program product is provided. The computer program product includes instructions, where the instructions, when executed by a processor, cause the information feedback method according to any one of the embodiments of the present disclosure to be implemented.

According to yet other embodiments of the present disclosure, a computer program is provided. The computer program includes instructions, where the instructions, when executed by a processor, cause the information feedback method according to any one of the embodiments of the present disclosure to be implemented.

From the following detailed description of exemplary embodiments of the present disclosure with reference to the accompanying drawings, other features and advantages of the present disclosure will become clear.

### BRIEF DESCRIPTION OF THE DRAWINGS

Preferred embodiments of the present disclosure are described below with reference to the accompanying drawings. The accompanying drawings illustrated herein are used to provide a further understanding of the present disclosure, and together with the following detailed description, are incorporated in and form a part of the specification, to explain the present disclosure. It should be understood that the accompanying drawings in the following description relate to only some embodiments of the present disclosure, and do not constitute a limitation on the present disclosure. In the accompanying drawings:
FIG. 1 illustrates a schematic flowchart of an information feedback method according to some embodiments of the present disclosure;
FIG. 2A to FIG. 2I illustrate a schematic diagram of a user interface according to some embodiments of the present disclosure;
FIG. 3 illustrates a schematic structural diagram of an information feedback apparatus according to some embodiments of the present disclosure;
FIG. 4 illustrates a schematic structural diagram of an information feedback apparatus according to some other embodiments of the present disclosure; and
FIG. 5 illustrates a schematic structural diagram of an information feedback apparatus according to still other embodiments of the present disclosure.

It should be understood that, for ease of description, the sizes of various parts shown in the accompanying drawings are not necessarily drawn to actual scale. The same or similar reference numerals in the accompanying drawings are used to denote the same or similar components. Therefore, once an item is defined in one of the drawings, it may not be further discussed in the subsequent accompanying drawings.

### DETAILED DESCRIPTION

The technical solutions in the embodiments of the present disclosure are clearly and completely described below with reference to the accompanying drawings of the embodiments of the present disclosure. However, clearly, the embodiments described are merely some embodiments of the present disclosure rather than all the embodiments. The following description of the embodiments is actually merely illustrative, and in no way serves as any limitation to the present disclosure and application or use thereof. It should be understood that the present disclosure may be implemented in various forms and should not be construed as being limited to the embodiments set forth herein.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect. Unless specifically stated otherwise, the relative arrangement of components and steps, numerical expressions, and numerical values set forth in these embodiments should be construed as merely examples, and do not limit the scope of the present disclosure.

The term "include" and the variations thereof used in the present disclosure are open-ended terms that include at least subsequent elements/features but do not exclude other elements/features, that is, "including but not limited to". Furthermore, the term "comprise" and the variations thereof used in the present disclosure are open-ended terms that comprise at least subsequent elements/features but do not exclude other elements/features, that is, "comprising but not limited to". Therefore, "include" is synonymous with "comprise". The term "based on" means "at least partially based on".

The terms "one embodiment", "some embodiments", or "an embodiment" described throughout the specification means that the specific features, structures, or characteristics described in connection with the embodiments are included in at least one embodiment of the present disclosure. For example, the term "one embodiment" means "at least one embodiment". The term "another embodiment" means "at least one another embodiment". The term "some embodiments" means "at least some embodiments". Moreover, the phrase "in one embodiment", "in some embodiments", or "in an embodiment" appearing in various places throughout the specification does not necessarily all refer to the same embodiment, but may also refer to the same embodiment.

It should be noted that concepts such as "first" and "second" mentioned in the present disclosure are only used to distinguish different apparatuses, modules, or units, and are not used to limit the sequence of functions performed by these apparatuses, modules, or units or interdependence. Unless otherwise specified, concepts such as "first" and "second" are not intended to imply that the objects described in this way must be in a given order in terms of time, space, or ranking, or in any other given order.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

The embodiments of the present disclosure are described in detail below with reference to the accompanying drawings. However, the present disclosure is not limited to these specific embodiments. The following specific embodiments may be combined with each other, and the same or similar concepts or processes may not be repeated in some embodiments. Furthermore, in one or more embodiments, specific features, structures, or characteristics may be combined in any suitable manner that would be clear to those of ordinary skill in the art from the present disclosure.

In many cases, multimedia contents sent by internet platforms to a user may not be contents the user wants to view, and adjustment of the sent multimedia contents cannot be performed accurately and efficiently.

In view of this, the present disclosure provides an information feedback method that can send multimedia contents to users more efficiently and accurately.

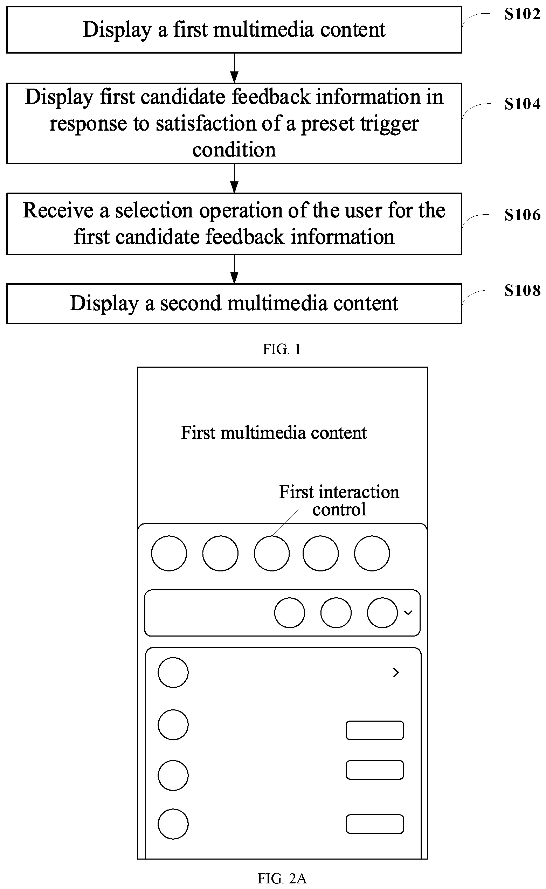

The present disclosure provides an information feedback method, which is described below with reference to FIGs. 1 to 2I.

FIG. 1 is a flowchart of some embodiments of the information feedback method of the present disclosure. As shown in FIG. 1, the method in this embodiment includes steps S102 to S108.

In step S102, first multimedia content is displayed.

The first multimedia content is, for example, one or a combination of multiple items of text, images, or videos. The first multimedia content may be selected from a database based on a preset strategy and sent to a client for display. The preset strategy may be an adjustment strategy corresponding to candidate feedback information selected by the user last time, or may be another strategy, which is not limited herein. The first multimedia content may be displayed in a multimedia content display interface (page). This multimedia content display interface may be dedicated to displaying the multimedia content selected based on the preset strategy or the candidate feedback information.

In step S104, first candidate feedback information is displayed in response to satisfaction of a preset trigger condition.

In some embodiments, the first candidate feedback information includes natural language information associated with one or more multimedia contents already sent to a user, and the first candidate feedback information is configured to describe a first adjustment strategy for multimedia contents sent to the user. The one or more multimedia contents include the first multimedia content.

For example, the first candidate feedback information is a statement generated based on relevant information of the one or more multimedia contents, where the relevant information includes: a title, an abstract, contents, a category, or the like, without limitation to the examples listed herein. The first candidate feedback information may include words configured to describe the one or more multimedia contents. The relevant information of the one or more multimedia contents may be input into a machine learning model (for example, a neural network model) to obtain the output first candidate feedback information. In a case where the neural network model outputs multiple pieces of feedback information, the multiple pieces of feedback information may be sorted according to a preset sorting manner (for example, by relevance to the one or more multimedia contents from high to low), and a preset number of pieces of feedback information are selected as the first candidate feedback information according to the sorting order.

In some embodiments, the first candidate feedback information is determined based on a category of the first multimedia content, or the first candidate feedback information is determined based on categories of a plurality of multimedia contents already sent to the user within a preset time range. The plurality of multimedia contents already sent to the user within the preset time range may include the first multimedia content.

For example, a category corresponding to an identifier of the stored first multimedia content may be queried from a database based on the identifier of the first multimedia content, or a category of the first multimedia content may be recognized through a machine learning model (e.g., a neural network), without limitation to the examples listed herein. Categories of the plurality of multimedia contents may be determined in a similar manner, which will not be repeated here. One multimedia content may correspond to multiple categories, and there may be multiple pieces of first candidate feedback information, where each piece of first candidate feedback information may correspond to a category. If the plurality of multimedia contents correspond to multiple categories, there may be multiple pieces of first candidate feedback information, where each piece of first candidate feedback information may correspond to a category. For example, the natural language information in the first candidate feedback information that is associated with the one or more multimedia contents already sent to the user may be words indicating categories. A sentence described in natural language may be generated through a machine learning model based on the words indicating categories to serve as the first candidate feedback information.

In some embodiments, the first adjustment strategy includes at least one of: a post-adjustment number of multimedia contents sent to the user, a post-adjustment category of multimedia contents sent to the user, an effective time range for adjustment, an adjustment degree, or a source of adjusted multimedia contents.

For example, the post-adjustment number may be expressed as more or less; the post-adjustment category may be configured to represent a category of multimedia content, for example, animals, plants, etc.; the effective time range for adjustment is, for example, within one week; the adjustment degree is, for example, mild adjustment, etc.; and the source of adjusted multimedia contents is, for example, obtaining multimedia contents from users followed by the user.

There may be multiple pieces of first candidate feedback information, each piece of first candidate feedback information may include the natural language information associated with the one or more multimedia contents already sent to the user, where contents of the multiple pieces of first candidate feedback information are different, and the corresponding first adjustment strategies are also different. Different first candidate feedback information may include natural language information associated with the same multimedia contents, or may include natural language information associated with different multimedia contents.

In some embodiments, an interaction operation of the user for the one or more multimedia contents is received (responded to), and a tendency of the first adjustment strategy is determined based on a type of the interaction operation of the user for the one or more multimedia contents.

For example, the types of the interaction operation are divided into a positive interaction operation and a negative interaction operation. The positive interaction operation may represent a positive emotional tendency of the user toward the one or more multimedia contents, for example, liking, commenting (posting a comment), sharing, bookmarking, completing viewing, etc., without limitation to the examples listed herein. The negative interaction operation may represent a negative emotional tendency of the user toward the one or more multimedia contents, for example, skipping (display time being lower than a threshold), disliking, etc., without limitation to the examples listed herein. Priorities of positive interaction operations and negative interaction operations may be set. If both a positive interaction operation and a negative interaction operation are generated for one multimedia content, the type of interaction operation corresponding to that multimedia content is determined according to the priority. For example, if the priority of negative interaction operations is high, for a multimedia content for which both a positive interaction operation and a negative interaction operation are generated, the corresponding type of interaction operation is determined to be a negative interaction operation. For a plurality of multimedia contents, if the types of generated interaction operations are different, different first candidate feedback information may be configured for different multimedia contents to describe first adjustment strategies with different tendencies. Alternatively, a tendency of the first adjustment strategy may be determined based on the type of interaction operation corresponding to the largest number of multimedia contents.

The tendency of the first adjustment strategy may be configured to represent a strength of a relationship between an adjusted multimedia content and the one or more multimedia contents already sent to the user. If the type of the interaction operation of the user for the one or more multimedia contents is positive, the tendency of the first adjustment strategy is positive, indicating that the adjusted multimedia content has a very strong relationship with the one or more multimedia contents already sent to the user; and if the type of the interaction operation of the user for the one or more multimedia contents is negative, the tendency of the first adjustment strategy is negative, indicating that the adjusted multimedia content has a very weak or no relationship with the one or more multimedia contents already sent to the user.

In some embodiments, second candidate feedback information is displayed, where the second candidate feedback information uses fixed natural language information to describe a second adjustment strategy for multimedia contents sent to the user, and a tendency of the second adjustment strategy is determined based on the type of the interaction operation of the user for the one or more multimedia contents.

The second candidate feedback information may be universal feedback information, and second candidate feedback information with different tendencies may be set. For a plurality of multimedia contents, if corresponding types of interaction operations are consistent, corresponding second candidate feedback information may be the same.

For example, the satisfaction of the preset trigger condition includes: receiving a preset operation of the user, display time of the first multimedia content reaching a preset duration, or the like; and the satisfaction of the preset trigger condition may further include: a number of displayed multimedia contents within a unit time granularity reaching a first threshold, and for a user, a number of times the candidate feedback information is displayed within a preset time range being lower than a second threshold, or the like, without limitation to the examples listed herein. For example, if 20 multimedia contents are displayed within one day, the preset trigger condition is satisfied, and for one user, if no candidate feedback information has been displayed within 7 days, the preset trigger condition is satisfied.

In some embodiments, a first operation of the user for the first multimedia content is received; in a case where the first operation is a preset interaction operation, a second operation of the user for the first multimedia content is received; and in a case where the second operation is a preset trigger operation, it is determined that the preset trigger condition is satisfied, and the first candidate feedback information is displayed.

For example, the preset interaction operation includes: a preset positive interaction operation and/or a preset negative interaction operation. The preset positive interaction operation may represent a positive emotional tendency of the user toward the first multimedia content, for example, liking, commenting (posting a comment), sharing, bookmarking, completing viewing, etc., without limitation to the examples listed herein. The preset negative interaction operation may represent a negative emotional tendency of the user toward the first multimedia content, for example, skipping (display time being lower than a threshold), disliking, etc., without limitation to the examples listed herein.

For example, a preset trigger operation is clicking a trigger control, swiping down to leave a display page for the first multimedia content, etc., without limitation to the examples listed herein.

In some embodiments, a third operation of the user for the first multimedia content is received, and a first interaction control is displayed; an operation of the user for the first interaction control is received; and in response to receiving the operation of the user for the first interaction control, it is determined that the preset trigger condition is satisfied, and the first candidate feedback information is displayed.

The third operation is, for example, clicking, long pressing, etc., without limitation to the examples listed herein. As shown in FIG. 2A, the first interaction control may be displayed in an interaction option interface, and the interaction option interface may be a panel displayed on a display page for the first multimedia content. The interaction option interface may further include other controls, for example, a download control for downloading the first multimedia content, a dislike control for indicating disinterest in the first multimedia content, share controls for different channels for sharing the first multimedia content through different channels, and a send control corresponding to different users that may be used for sending the first multimedia content to different users, or the like, without limitation to the examples listed herein. The user may display the first candidate feedback information by clicking the first interaction control.

The first candidate feedback information may be displayed in a feedback information display interface, where the feedback information display interface may be a page independent of a multimedia content display page, or may be a window, panel, etc., additionally displayed on the multimedia content display page, without limitation to the examples listed herein.

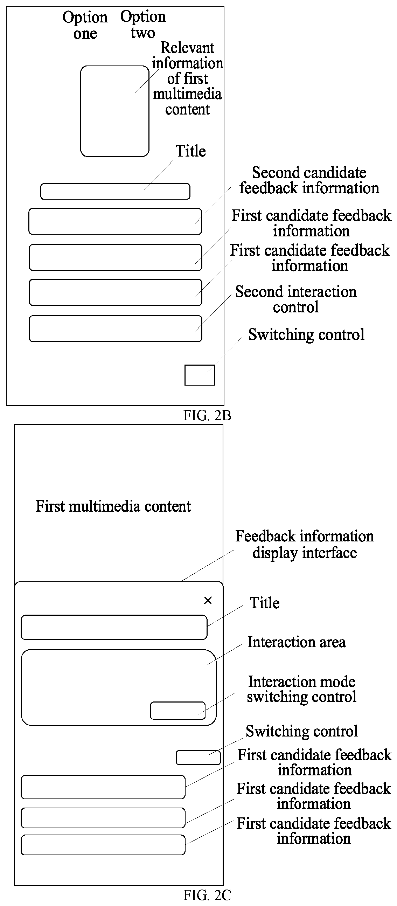

In a case where the feedback information display interface is a page independent of the multimedia content display page, it may be another page displayed after leaving the display page for the first multimedia content through an operation such as swiping down. The feedback information display interface may be a multimedia content display page for displaying the first candidate feedback information. That is, the feedback information display page and the multimedia content display page are pages of the same type, and are configured within a group of pages corresponding to the same option (for example, option two shown in FIG. 2B).

As shown in FIG. 2B, the feedback information display interface is an independent page including: multiple pieces of first candidate feedback information. The feedback information display interface may further include a title for prompting feedback on the one or more multimedia contents. For example, the title is "Do you like this (these) video(s)?" Multiple pieces of first candidate feedback information may be displayed below the title. Relevant information of the first multimedia content may also be displayed, for example, an image, text, video, etc., of the first multimedia content. The feedback information display interface may further include second candidate feedback information. The feedback information display interface further includes a second interaction control, where the second interaction control and the first interaction control may trigger the same interface, which will be described in subsequent embodiments.

The feedback information display interface may be a window, panel, etc., additionally displayed on the multimedia content display page. For example, the feedback information display interface is displayed by triggering the first interaction control.

As shown in FIG. 2C, the feedback information display interface is a panel additionally displayed on the multimedia content display page, including: multiple pieces of first candidate feedback information. The feedback information display interface may further include a title for prompting feedback on the one or more multimedia contents, or prompting that the user may adjust received multimedia content through the current interface. For example, the title is "Customize Subscription Feed". The feedback information display interface may include an interaction area in which information input by the user is received and multimedia content adjusted based on the input information is displayed, where the input information is subject to machine understanding to determine an adjustment manner for the multimedia content. The interaction area may further include an interaction mode switching control. After receiving an operation of the user for the interaction mode switching control, a prompt identifier and interface of the post-switching interaction mode is displayed. For example, the interaction mode may be voice, text, etc., and FIG. 2C displays text input.

In some embodiments, a switching control is displayed; an operation of the user for the switching control is received; post-switching third candidate feedback information is displayed, where the third candidate feedback information includes natural language information associated with the one or more multimedia contents already sent to the user, and the third candidate feedback information is configured to describe a third adjustment strategy for multimedia contents sent to the user.

For example, as shown in FIGs. 2B and 2C, the feedback information display interface includes a switching control, and by triggering of the switching control, one or more pieces of candidate feedback information may be switched.

The form of the feedback information display interface may be set based on actual requirements, without limitation to the examples listed above.

In step S106, a selection operation of the user for the first candidate feedback information is received.

For example, an operation such as clicking on the first candidate feedback information by the user is received, and it is confirmed that the user selects the first candidate feedback information. A selection operation of the user for the second candidate feedback information or third candidate feedback information may also be received.

In step S108, a second multimedia content is displayed, where the second multimedia content is selected based on the first adjustment strategy.

For example, if the first candidate feedback information is "Display more videos about Chinese food," the second multimedia content may be videos about Chinese food. The second multimedia content may be selected based on a category included in the first candidate feedback information or the first adjustment strategy. Multimedia content corresponding to the category included in the first candidate feedback information or the first adjustment strategy may be searched for in a database as the second multimedia content. Categories of various multimedia contents in the database may be identified in advance through a neural network model, and the multimedia contents may be stored with corresponding categories.

In some embodiments, first prompt information is displayed in response to receiving the selection operation of the user for the first candidate feedback information, where the first prompt information is configured to prompt that the first candidate feedback information has been recorded.

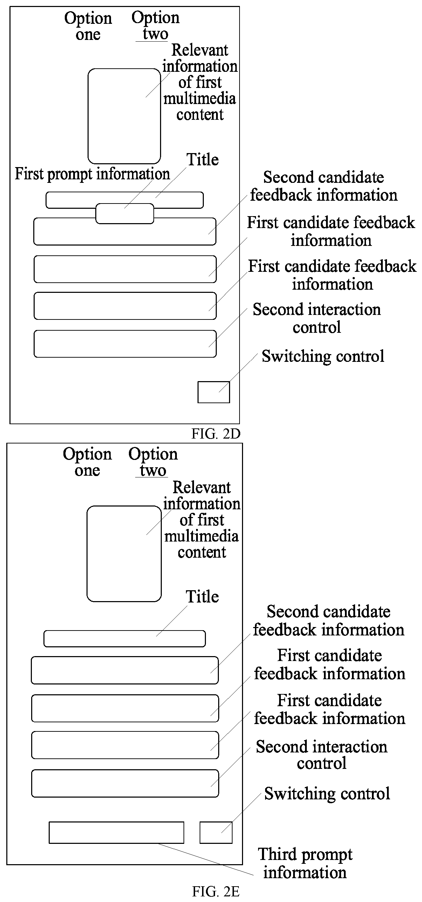

The first candidate feedback information may be recorded in a historical record, and after the recorded first candidate feedback information takes effect, the second multimedia content is displayed. As shown in FIG. 2D, the first prompt information in text form such as "Recorded" may pop up. The first prompt information may also be a prompt identifier in a form such as a check mark, selection operations of the user for multiple pieces of first candidate feedback information may be received, and after each piece of first candidate feedback information, first prompt information in the form of a prompt identifier may be displayed, while first prompt information in a text form may also be displayed simultaneously.

In some embodiments, a cancellation operation of the user for the first candidate feedback information is received, and second prompt information is displayed or the first prompt information is canceled, where the second prompt information is configured to prompt that a record of the first candidate feedback information has been canceled.

The second prompt information may be cancellation of the first prompt information in the form of a prompt identifier, or may be prompt information in a text form. For example, if a click on the selected first candidate feedback information by the user is received again, the prompt identifier in the form of a check mark disappears or text "Canceled" pops up, without limitation to the examples listed herein.

In some embodiments, in a case where a number of records in the historical records reaches a preset number, third prompt information is displayed, where the third prompt information is configured to prompt that the number of records in the historical records reaches the preset number.

In some embodiments, an operation of the user for the third prompt information is received; the historical records are displayed; a deletion operation of the user for one or more records in the historical records is received; and the historical records from which the one or more records have been deleted are displayed.

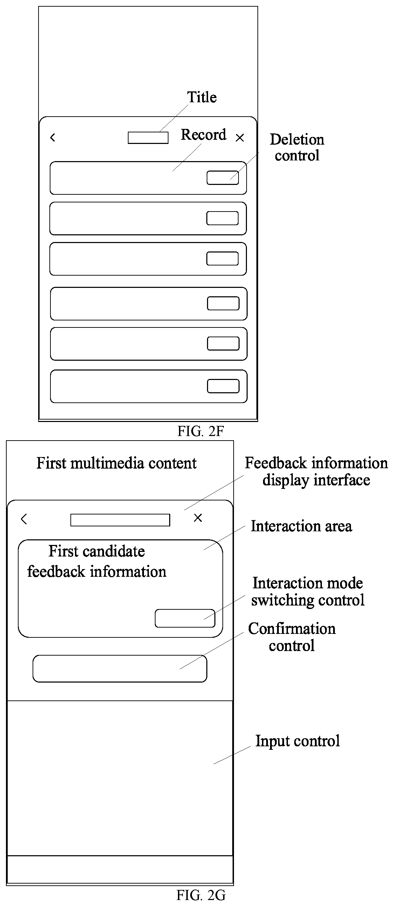

As shown in FIG. 2E, if the number of records in the historical records reaches the preset number, the third prompt information may pop up, and the first prompt information may not be displayed. An operation such as clicking on the third prompt information by the user may be received, and the historical records are displayed, as shown in FIG. 2F. A historical record display interface may include multiple records, where each record may display recorded candidate feedback information, and each record may be provided with a corresponding deletion control. A deletion operation of the user for one or more records in the historical records is received, and the historical records from which the one or more records have been deleted are displayed. The historical record interface may further include a title, for example, in a form such as "Historical Record". Closing the display interface for the historical records may return to a multimedia content playback interface or a feedback information display interface.

In some embodiments, an operation of the user for an interface displaying the first candidate feedback information is received; and the second multimedia content is displayed.

The interface for the first candidate feedback information is the feedback information display interface, and an operation such as closing the feedback information display interface or swiping down by the user may be received to return to the multimedia content display interface to display the second multimedia content.

In some embodiments, in a case where the feedback information display interface includes an interaction area, in response to a selection operation of the user for the first candidate feedback information, the first candidate feedback information is displayed in the interaction area; a confirmation operation of the user for the first candidate feedback information is received; and the second multimedia content is displayed.

In some embodiments, in response to a confirmation operation of the user for the first candidate feedback information, adjustment information corresponding to the first candidate feedback information is displayed; a confirmation operation of the user for the adjustment information is received; and the second multimedia content is displayed.

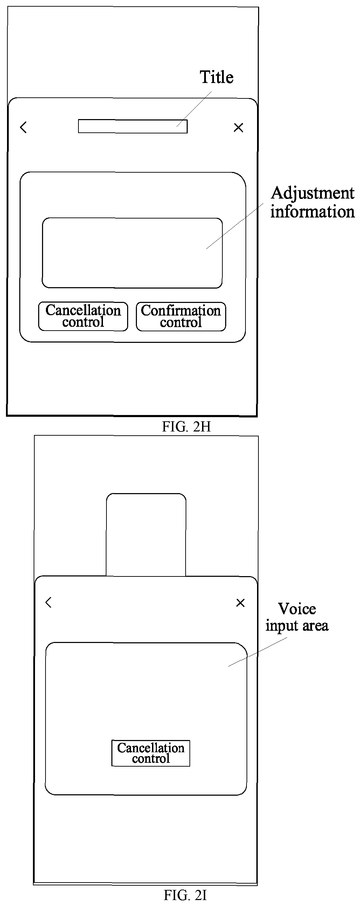

As shown in FIG. 2C, the feedback information display interface includes an interaction area, and in response to receiving a selection operation of the user for the first candidate feedback information the first candidate feedback information may be filled into the interaction area, and an editing mode may be entered, while simultaneously an input control (for example, a keyboard) may be invoked, as shown in FIG. 2G. A confirmation control may also be displayed to receive a confirmation operation of the user for the first candidate feedback information. After receiving the confirmation operation of the user for the first candidate feedback information, adjustment information may be displayed, as shown in FIG. 2H, and below the adjustment information, a confirmation control and a cancellation control may be displayed. In a case where a confirmation operation of the user is received, the multimedia content display interface may be returned to, and the second multimedia content is displayed. In a case where a cancellation operation of the user is received, the previous page may be returned to, for example, the page shown in FIG. 2G.

The adjustment information and the first candidate feedback information may describe the first adjustment strategy from different perspectives. For example, the first candidate feedback information may describe a desired adjustment from a user perspective, while the adjustment information may describe an upcoming adjustment from a platform perspective. Conversion between the adjustment information and the first candidate feedback information may be performed through a natural language processing model.

In the solution of the embodiments described above, by receiving confirmation operations from the user multiple times and converting information, the user's feedback can be understood more accurately, thereby improving the accuracy of multimedia content adjustment.

In some embodiments, a selection operation of the user for the second candidate feedback information is received; a third multimedia content is displayed, where the third multimedia content is selected based on the second adjustment strategy. In some embodiments, a selection operation of the user for the third candidate feedback information is received; a fourth multimedia content is displayed, where the fourth multimedia content is selected based on the third adjustment strategy.

For the processes of receiving the selection operation of the user for the second candidate feedback information and displaying the third multimedia content, or the processes of receiving the selection operation of the user for the third candidate feedback information and displaying the fourth multimedia content, reference may be made to the embodiments described above, which will not be repeated here.

In some embodiments, in a case where the first candidate feedback information is displayed in the interaction area, an editing operation of the user is received, and edited candidate feedback information is displayed, where the edited candidate feedback information is subjected to machine understanding to determine an adjustment manner for multimedia content. A confirmation operation of the user for the edited candidate feedback information is received, and a multimedia content selected based on the adjustment manner is displayed.

In the solution of the embodiments described above, in a case where the first multimedia content is displayed, first candidate feedback information is displayed in response to the satisfaction of the preset trigger condition, where the first candidate feedback information includes the natural language information associated with the one or more multimedia contents already sent to the user, and is used to describe the first adjustment strategy for multimedia contents sent to the user. After receiving the selection operation of the user for the first candidate feedback information, the second multimedia content selected based on the first adjustment strategy and sent is displayed. Through the method of the embodiments described above, feedback information of the user for the one or more multimedia contents already sent may be received efficiently and accurately, and the sent multimedia contents may be adjusted quickly and accurately, thereby improving efficiency and accuracy of multimedia contents sent to the user.

As mentioned in the foregoing embodiments, the feedback information display interface may have different implementations. In a case where the feedback information display interface does not include an interaction area, a second interaction control may be displayed, and upon receiving trigger of the second interaction control by the user, a feedback information display interface having an interaction area may be entered.

In some embodiments, a second interaction control is displayed; an operation of the user for the second interaction control is received; and an interaction area and fourth candidate feedback information are displayed, where the fourth candidate feedback information includes the natural language information associated with the one or more multimedia contents already sent to the user, and the fourth candidate feedback information is configured to describe a fourth adjustment strategy for multimedia contents sent to the user.

In some embodiments, the fourth candidate feedback information is determined based on categories of a plurality of multimedia contents already sent to the user within a preset time range, which may refer to the foregoing embodiments and will not be repeated here.

As shown in FIG. 2C, in a case of entering the feedback information display interface having the interaction area through the first control, the first candidate feedback information is displayed, and in a case of entering the feedback information display page having the interaction area through the second control, the fourth candidate feedback information may be displayed, where the fourth candidate feedback information may be the same as or different from the first candidate feedback information. In a case where the neural network model outputs multiple pieces of feedback information, the multiple pieces of feedback information may be sorted according to a preset sorting manner (for example, by relevance to the one or more multimedia contents from high to low), and a preset number of pieces of feedback information are selected as the first candidate feedback information according to the sorting order. In a case of entering the feedback information display page having the interaction area through the second control, candidate feedback information after the first candidate feedback information is selected according to the sorting order as the fourth candidate feedback information.

In some embodiments, a confirmation operation of the user for the fourth candidate feedback information is received; and a fifth multimedia content is displayed, where the fifth multimedia content is selected based on the fourth adjustment strategy.

In some embodiments, in response to the confirmation operation of the user for the fourth candidate feedback information, adjustment information corresponding to the fourth candidate feedback information is displayed; a confirmation operation of the user for the adjustment information is received; and the fifth multimedia content is displayed in response to the confirmation operation of the user for the adjustment information.

Specific details may refer to the selection and confirmation processes for the first candidate feedback information, which will not be repeated here.

In some embodiments, the second interaction control may include an interaction mode switching sub-control. In response to receiving an operation of the user for the interaction mode switching sub-control, an interface of different interaction modes is displayed. For example, in a case where the interaction mode is text input, a feedback information display interface having an interaction area is displayed; and in a case where the interaction mode is voice input, a voice input interface is displayed. As shown in FIG. 2I, the voice input interface includes a voice input area and a cancellation control.

In a case where trigger of voice input by the user is received, it is determined whether microphone permission is granted. If microphone permission has been granted, sound reception is directly initiated. If microphone permission is disabled, authorization prompt information is displayed to the user, and voice input cannot be used otherwise. An authorization process is performed based on an operation of the user. Before microphone permission is granted, each trigger of voice input requires entering the authorization process.

The authorization prompt information may be displayed by adopting a pop-up window or other modes, and an authorization control, a close control, etc., may be set. Upon receiving a click by the user on the authorization control, authorization may be directly granted, or a settings interface may be entered to perform authorization settings, etc.

In a case where sound reception is started, whether voice input is completed is determined based on a duration of voice stopping of the user. For example, if no voice input occurs within 1 second, sound reception is confirmed as completed. In the voice input area, a voice recognition result may be displayed in real time, and an animation or text indicating ongoing sound reception may be displayed as sound reception prompt information. If the voice recognition result exceeds a preset number of characters, scrolling or sliding display is supported.

In a case where sound reception is started, if no user voice is received within a preset duration, sound reception failure may be determined, and failure prompt information is displayed. In a case where sound reception is completed or sound reception is interrupted, a feedback information display page having an interaction area may be displayed, and the voice recognition result is displayed in the interaction area.

In some embodiments, on a display interface for the adjusted multimedia content such as the second multimedia content, the third multimedia content, the fourth multimedia content, or the fifth multimedia content, an entry control for historical records may be displayed; an operation of the user for the entry control for the historical records is received; and the historical records are displayed, where the historical records include the first candidate feedback information.

In some embodiments, a deletion operation of the user for one or more records in the historical records is received; and the historical records from which the one or more records have been deleted are displayed.

For specific display manners of the historical records, etc., reference may be made to the foregoing embodiments, which will not be repeated here.

The method of the embodiments described above provides multiple display methods for candidate feedback information to the user to improve accuracy and efficiency of receiving user feedback information, thereby improving accuracy and efficiency of multimedia content adjustment.

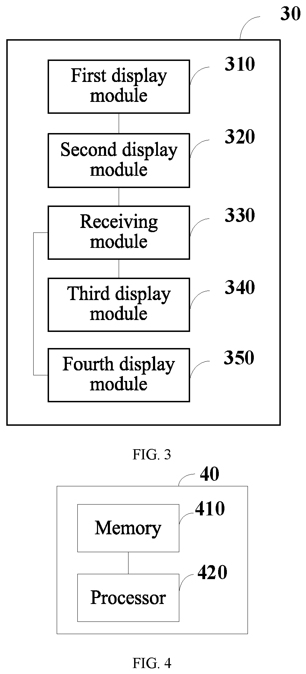

The present disclosure further provides an information feedback apparatus, which is described below with reference to FIG. 3.

FIG. 3 is a structural diagram of some embodiments of an information feedback apparatus of the present disclosure. As shown in FIG. 3, an apparatus 30 in this embodiment includes: a first display module 310, a second display module 320, a receiving module 330, and a third display module 340.

The first display module 310 is configured to display a first multimedia content.

The second display module 320 is configured to display first candidate feedback information in response to satisfaction of a preset trigger condition, where the first candidate feedback information includes natural language information associated with one or more multimedia contents already sent to a user, and the first candidate feedback information is configured to describe a first adjustment strategy for multimedia contents sent to the user, and the one or more multimedia contents includes the first multimedia content; and the receiving module 330 is configured to receive a selection operation of the user for the first candidate feedback information.

The third display module 340 is configured to display a second multimedia content, where the second multimedia content is selected based on the first adjustment strategy.

In some embodiments, the receiving module 330 is further configured to receive an interaction operation of the user for the one or more multimedia contents, where a tendency of the first adjustment strategy is determined based on a type of the interaction operation of the user for the one or more multimedia contents.

In some embodiments, the second display module 320 is further configured to display second candidate feedback information, where the second candidate feedback information uses fixed natural language information to describe a second adjustment strategy for multimedia contents sent to the user, and a tendency of the second adjustment strategy is determined based on the type of the interaction operation of the user for the one or more multimedia contents. The receiving module 330 is further configured to receive a selection operation of the user for the second candidate feedback information; and the third display module 340 is further configured to display a third multimedia content, where the third multimedia content is selected based on the second adjustment strategy.

In some embodiments, the receiving module 330 is further configured to receive a first operation of the user for the first multimedia content; and in a case where the first operation is a preset interaction operation, receive a second operation of the user for the first multimedia content. The second display module 320 is further configured to, in a case where the second operation is a preset trigger operation, determine that the preset trigger condition is satisfied, and display the first candidate feedback information.

In some embodiments, the receiving module 330 is further configured to receive a third operation of the user for the first multimedia content, and display a first interaction control; and receive an operation of the user for the first interaction control; and the second display module 320 is further configured to, in response to receiving the operation of the user for the first interaction control, determine that the preset trigger condition is satisfied, and display the first candidate feedback information.

In some embodiments, the first adjustment strategy includes at least one of: a post-adjustment number of multimedia contents sent to the user, a post-adjustment category of multimedia contents sent to the user, an effective time range for adjustment, an adjustment degree, or a source of adjusted multimedia contents.

In some embodiments, the second display module 320 is further configured to display a display switching control; the receiving module 330 is further configured to receive an operation of the user for the switching control; the second display module 320 is further configured to display post-switching third candidate feedback information, where the third candidate feedback information includes natural language information associated with the one or more multimedia contents already sent to the user, and the third candidate feedback information is configured to describe a third adjustment strategy for multimedia contents sent to the user; the receiving module 330 is further configured to receive a selection operation of the user for the third candidate feedback information; and the third display module 340 is further configured to display a fourth multimedia content, where the fourth multimedia content is selected based on the third adjustment strategy.

In some embodiments, the second display module 320 is further configured to display first prompt information in response to receiving the selection operation of the user for the first candidate feedback information, where the first prompt information is configured to prompt that the first candidate feedback information has been recorded.

In some embodiments, the receiving module 330 is further configured to receive a cancellation operation of the user for the first candidate feedback information; and the second display module 320 is further configured to display second prompt information, where the second prompt information is configured to prompt that a record of the first candidate feedback information has been canceled.

In some embodiments, the receiving module 330 is further configured to receive an operation of the user for an interface displaying the first candidate feedback information, and trigger the third display module 340 to display the second multimedia content.

In some embodiments, the second display module 320 is further configured to display a second interaction control; the receiving module 330 is further configured to receive an operation of the user for the second interaction control; and the second display module 320 is further configured to display an interaction area and fourth candidate feedback information, where the fourth candidate feedback information includes the natural language information associated with the one or more multimedia contents already sent to the user, and the fourth candidate feedback information is configured to describe a fourth adjustment strategy for multimedia contents sent to the user.

In some embodiments, the receiving module 330 is further configured to receive a selection operation of the user for the fourth candidate feedback information; and the third display module 340 is further configured to display a fifth multimedia content, where the fifth multimedia content is selected based on the fourth adjustment strategy.

In some embodiments, the second display module 320 is further configured to display, in response to the selection operation of the user for the fourth candidate feedback information, the fourth candidate feedback information in the interaction area; and the receiving module 330 is further configured to receive a confirmation operation of the user for the fourth candidate feedback information, and trigger the third display module 340 to display the fifth multimedia content.

In some embodiments, the second display module 320 is further configured to display, in response to the confirmation operation of the user for the fourth candidate feedback information, adjustment information corresponding to the fourth candidate feedback information; and the receiving module 330 is further configured to receive a confirmation operation of the user for the adjustment information, and trigger the third display module 340 to display the fifth multimedia content.

In some embodiments, the information feedback apparatus further includes a fourth display module 350, where the third display module 340 is further configured to display an entry control for historical records; the receiving module 330 is further configured to receive an operation of the user for the entry control for the historical records; and the fourth display module 350 is configured to display the historical records, where the historical records include the first candidate feedback information.

In some embodiments, the receiving module 330 is further configured to receive a deletion operation of the user for one or more records in the historical records; and the fourth display module 350 is further configured to display the historical records from which the one or more records have been deleted.

In some embodiments, the second display module 320 is further configured to, in a case where a number of records in the historical records reaches a preset number, display third prompt information, where the third prompt information is configured to prompt that the number of records in the historical records reaches the preset number.

In some embodiments, the receiving module 330 is further configured to receive an operation of the user for the third prompt information; the fourth display module 350 is configured to display the historical records; the receiving module 330 is further configured to receive a deletion operation of the user for one or more records in the historical records; and the fourth display module 350 is configured to display the historical records from which the one or more records have been deleted.

In some embodiments, the first candidate feedback information is determined based on a category of the first multimedia content.

In some embodiments, the fourth candidate feedback information is determined based on categories of a plurality of multimedia contents already sent to the user within a preset time range.

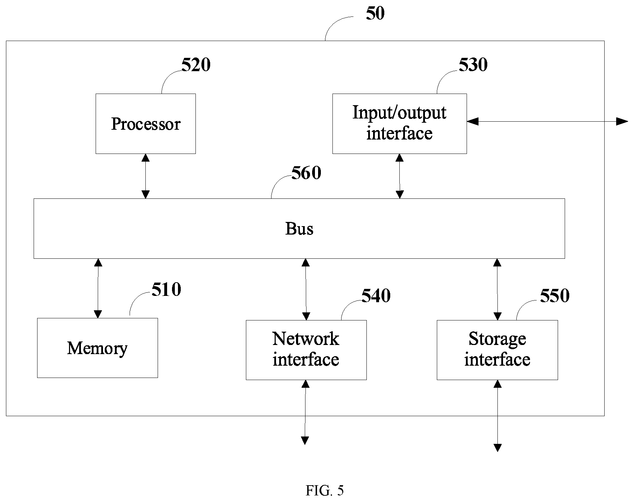

The information feedback apparatuses in embodiments of the present disclosure may each be implemented by a variety of computing devices or computer systems, which will be described below in conjunction with FIGs. 4 and 5.

FIG. 4 is a structural diagram of some embodiments of an information feedback apparatus of the present disclosure. As shown in FIG. 4, an apparatus 40 in this embodiment includes: a memory 410 and a processor 420 coupled to the memory 410, where the processor 420 is configured to execute the information feedback method in any of some embodiments of the present disclosure based on instructions stored in the memory 410.

The memory 410 may include, for example, a system memory, a fixed non-volatile storage medium, etc. The system memory has, for example, an operating system, an application, a boot loader, a database, and other programs stored therein.

FIG. 5 is a structural diagram of some other embodiments of an information feedback apparatus of the present disclosure. As shown in FIG. 5, an apparatus 50 in this embodiment includes: a memory 510 and a processor 520, which are similar to the memory 410 and the processor 420, respectively. It may further include an input/output interface 530, a network interface 540, a storage interface 550, etc. These interfaces 530, 540, and 550, and the memory 510 and the processor 520 may be connected to each other via a bus 560, for example. Among them, the input/output interface 530 provides a connection interface for an input/output device such as a display, a mouse, a keyboard, and a touch screen. The network interface 540 provides a connection interface for various networked devices, which, for example, may be connected to a database server or a cloud storage server, etc. The storage interface 550 provides a connection interface for an external storage device such as an SD card and a USB flash drive.

The present disclosure further provides a computer-readable storage medium having a computer program stored thereon, where the program, when executed by a processor, causes the information feedback method in any one of the foregoing embodiments to be implemented.

The present disclosure further provides a computer program including instructions, where the instructions, when executed by a processor, cause the information feedback method in any one of the foregoing embodiments to be implemented.

The present disclosure further provides a computer program product including instructions, where the instructions, when executed by a processor, cause the information feedback method in any one of the foregoing embodiments to be implemented.

The present disclosure further provides a computer program including instructions, where the instructions, when executed by a processor, cause the information feedback method in any one of the foregoing embodiments to be implemented.

It should be understood by those skilled in the art that the embodiments of the present disclosure can be provided as a method, a system, or a computer program product. Accordingly, the present disclosure may take a form of an entirely hardware embodiment, an entirely software embodiment, or an embodiment combining software and hardware aspects. Furthermore, the present disclosure may take the form of a computer program product that is implemented on one or more computer-usable non-transitory storage media (including, but not limited to, a disk memory, a CD-ROM, an optical memory, etc.) that include computer-usable program code.

The present disclosure is described with reference to the flowcharts and/or the block diagrams of the method, the device (system), and the computer program product according to the embodiments of the present disclosure. It should be interpreted that each procedure and/or block in the flowcharts and/or block diagrams, and a combination of procedures and/or blocks in the flowcharts and/or block diagrams may be implemented by computer program instructions. These computer program instructions may be provided to a processor of a general-purpose computer, a special-purpose computer, an embedded processor or other programmable data processing devices to create a machine, such that the instructions executed by the processor of the computer or other programmable data processing devices create means for implementing functions specified in one or more procedures in the flowcharts and/or one or more blocks in the block diagrams.

These computer program instructions may also be stored in a computer-readable memory that may direct the computer or other programmable data processing devices to operate in a specific manner, such that the instructions stored in the computer-readable memory create an article of manufacture including instruction means, and the instruction means implements the functions specified in one or more procedures in the flowcharts and/or one or more blocks in the block diagrams.

These computer program instructions may also be loaded onto the computer or other programmable data processing devices, such that a series of operation steps are executed on the computer or other programmable devices to perform computer-implemented processing, and thus the instructions executed on the computer or other programmable devices provide steps for implementing the functions specified in one or more procedures in the flowcharts and/or one or more blocks in the block diagrams.

The above description is merely illustrative of the preferred embodiments of the present disclosure and is not intended to limit the present disclosure. Any modifications, equivalent substitutions, improvements, etc. made within the spirit and principles of the present disclosure shall fall within the scope of protection of the present disclosure.

## Claims

1. An information feedback method, comprising:
displaying a first multimedia content;
displaying first candidate feedback information in response to satisfaction of a preset trigger condition, wherein the first candidate feedback information comprises natural language information associated with one or more multimedia contents already sent to a user, and the first candidate feedback information is configured to describe a first adjustment strategy for multimedia contents sent to the user, and the one or more multimedia contents comprise the first multimedia content;
receiving a selection operation of the user for the first candidate feedback information; and
displaying a second multimedia content, wherein the second multimedia content is selected based on the first adjustment strategy.

2. The information feedback method according to claim 1, further comprising:
receiving an interaction operation of the user for the one or more multimedia contents,
wherein a tendency of the first adjustment strategy is determined based on a type of the interaction operation of the user for the one or more multimedia contents.

3. The information feedback method according to claim 2, further comprising:
displaying second candidate feedback information, wherein the second candidate feedback information uses fixed natural language information to describe a second adjustment strategy for multimedia contents sent to the user, and a tendency of the second adjustment strategy is determined based on the type of the interaction operation of the user for the one or more multimedia contents;
receiving a selection operation of the user for the second candidate feedback information; and
displaying a third multimedia content, wherein the third multimedia content is selected based on the second adjustment strategy.

4. The information feedback method according to any one of claims 1 to 3, wherein displaying the first candidate feedback information in response to satisfaction of the preset trigger condition comprises:
receiving a first operation of the user for the first multimedia content; receiving a second operation of the user for the first multimedia content, in a case where the first operation is a preset interaction operation; and determining that the preset trigger condition is satisfied, and displaying the first candidate feedback information, in a case where the second operation is a preset trigger operation.

5. The information feedback method according to any one of claims 1 to 4, wherein displaying the first candidate feedback information in response to satisfaction of the preset trigger condition comprises:
receiving a third operation of the user for the first multimedia content, and displaying a first interaction control;
receiving an operation of the user for the first interaction control; and
determining that the preset trigger condition is satisfied, and displaying the first candidate feedback information, in response to receiving the operation of the user for the first interaction control.

6. The information feedback method according to any one of claims 1 to 5, wherein
the first adjustment strategy comprises at least one of: a post-adjustment number of multimedia contents sent to the user, a post-adjustment category of multimedia contents sent to the user, an effective time range for adjustment, an adjustment degree, or a source of adjusted multimedia contents.

7. The information feedback method according to any one of claims 1 to 6, further comprising:
displaying a switching control;
receiving an operation of the user for the switching control;
displaying post-switching third candidate feedback information, wherein the third candidate feedback information comprises natural language information associated with the one or more multimedia contents already sent to the user, and the third candidate feedback information is configured to describe a third adjustment strategy for multimedia contents sent to the user;
receiving a selection operation of the user for the third candidate feedback information; and
displaying a fourth multimedia content, wherein the fourth multimedia content is selected based on the third adjustment strategy.

8. The information feedback method according to any one of claims 1 to 7, further comprising:
displaying first prompt information in response to receiving the selection operation of the user for the first candidate feedback information, wherein the first prompt information is configured to prompt that the first candidate feedback information has been recorded.

9. The information feedback method according to claim 8, further comprising:
receiving a cancellation operation of the user for the first candidate feedback information; and
displaying second prompt information, wherein the second prompt information is configured to prompt that a record of the first candidate feedback information has been canceled.

10. The information feedback method according to any one of claims 1 to 9, wherein displaying the second multimedia content comprises:
receiving an operation of the user for an interface displaying the first candidate feedback information; and
displaying the second multimedia content.

11. The information feedback method according to any one of claims 1 to 10, further comprising:
displaying a second interaction control;
receiving an operation of the user for the second interaction control; and
displaying an interaction area and fourth candidate feedback information, wherein the fourth candidate feedback information comprises the natural language information associated with the one or more multimedia contents already sent to the user, and the fourth candidate feedback information is configured to describe a fourth adjustment strategy for multimedia contents sent to the user.

12. The information feedback method according to claim 11, further comprising:
receiving a selection operation of the user for the fourth candidate feedback information; and
displaying a fifth multimedia content, wherein the fifth multimedia content is selected based on the fourth adjustment strategy.

13. The information feedback method according to claim 12, wherein displaying the fifth multimedia content comprises:
displaying, in response to the selection operation of the user for the fourth candidate feedback information, the fourth candidate feedback information in the interaction area;
receiving a confirmation operation of the user for the fourth candidate feedback information; and
displaying the fifth multimedia content.

14. The information feedback method according to claim 13, further comprising:
displaying, in response to the confirmation operation of the user for the fourth candidate feedback information, adjustment information corresponding to the fourth candidate feedback information; and
receiving a confirmation operation of the user for the adjustment information,
wherein displaying the fifth multimedia content comprises:
displaying the fifth multimedia content in response to the confirmation operation of the user for the adjustment information.

15. The information feedback method according to any one of claims 1 to 14, further comprising:
displaying an entry control for historical records;
receiving an operation of the user for the entry control for the historical records; and
displaying the historical records, wherein the historical records comprise the first candidate feedback information.

16. The information feedback method according to claim 15, further comprising:
receiving a deletion operation of the user for one or more records in the historical records; and
displaying the historical records from which the one or more records have been deleted.

17. The information feedback method according to claim 8, further comprising:
displaying third prompt information, in a case where a number of records in the historical records reaches a preset number, wherein the third prompt information is configured to prompt that the number of records in the historical records reaches the preset number.

18. The information feedback method according to claim 17, further comprising:
receiving an operation of the user for the third prompt information;
displaying the historical records;
receiving a deletion operation of the user for one or more records in the historical records; and
displaying the historical records from which the one or more records have been deleted.

19. The information feedback method according to any one of claims 1 to 18, wherein the first candidate feedback information is determined based on a category of the first multimedia content.

20. The information feedback method according to any one of claims 11 to 14, wherein the fourth candidate feedback information is determined based on categories of a plurality of multimedia contents already sent to the user within a preset time range.

21. An information feedback apparatus, comprising:
a first display module configured to display a first multimedia content;
a second display module configured to display first candidate feedback information in response to satisfaction of a preset trigger condition, wherein the first candidate feedback information comprises natural language information associated with one or more multimedia contents already sent to a user, and the first candidate feedback information is configured to describe a first adjustment strategy for multimedia contents sent to the user, and the one or more multimedia contents comprise the first multimedia content;
a receiving module configured to receive a selection operation of the user for the first candidate feedback information; and
a third display module configured to display a second multimedia content, wherein the second multimedia content is selected based on the first adjustment strategy.

22. An information feedback apparatus, comprising:
a processor; and
a memory coupled to the processor, which is configured to store instructions, wherein the instructions, when executed by the processor, cause the processor to execute the information feedback method according to any one of claims 1 to 20.

23. A computer-readable storage medium having a computer program stored thereon, wherein the program, when executed by a processor, causes the processor to implement the information feedback method according to any one of claims 1 to 20.

24. A computer program product, comprising instructions, wherein the instructions, when executed by a processor, cause the information feedback method according to any one of claims 1 to 20 to be implemented.

25. A computer program comprising instructions, wherein the instructions, when executed by a processor, cause the information feedback method according to any one of claims 1 to 20 to be implemented.
